# DEMANDE DE BREVET EUROPEEN

(11) **EP 0 614 303 A1**
(43) Date de publication de la demande: **07.09.1994**
(21) Numéro de dépôt: 94400444.9
(22) Date de dépôt: 02.03.1994
(51) Int. Cl.: H04M 1/00, H04Q 7/04

(54) **Procédé pour délivrer un numéro de téléphone associé à un abonnement téléphonique, postes téléphoniques et téléphone mobile mettant en oeuvre ce procédé**

(30) Priorité: 03.03.1993 FR 9302470
(71) Demandeur: ALCATEL MOBILE COMMUNICATION FRANCE, 75008 Paris (FR)
(72) Inventeur: Desblancs, Eric, F-75018 Paris (FR); Coz, Brigitte, F-75018 Paris (FR)
(74) Mandataire: Renaud-Goud, Thierry

(57) **Abrégé**

Procédé pour délivrer un numéro de téléphone (N) associé à un abonnement téléphonique à l'utilisateur d'un poste téléphonique (20) dans le cadre dudit abonnement, l'utilisation de cet poste (20) étant conditionnée à la fourniture par l'utilisateur audit poste d'un ensemble de données d'identification d'abonnement stockées dans un support d'informations (3) détenu par le titulaire dudit abonnement et coopérant avec ledit poste téléphonique (20).

Le numéro de téléphone est préalablement stocké dans le support d'informations (3) et est transféré dans le poste téléphonique (20) à la demande de l'utilisateur, pour être délivré à l'utilisateur de ce poste, notamment par affichage sur un écran (2).

Utilisation en téléphonie mobile.

## Description

La présente invention concerne un procédé pour délivrer un numéro de téléphone associé à un abonnement téléphonique.

Elle vise également des postes téléphoniques, notamment un téléphone mobile mettant en oeuvre ce procédé.

Tout utilisateur de téléphone s'est retrouvé un jour dans la situation de ne pas connaître ou de ne plus se souvenir du numéro de l'appareil qu'il utilise. Une façon simple et usuelle de résoudre ce problème est d'étiqueter le numéro sur le matériel téléphonique. Mais cette solution suppose qu'à un poste téléphonique donné, puisse être associé un numéro de téléphone. En revanche, cette solution n'est pas acceptable avec des téléphones mobiles opérant par exemple dans le cadre de la nouvelle norme de téléphonie mobile pan-européenne GSM (Global Service for Mobile Communication). En effet, dans ce cas, la notion de numéro de téléphone n'est plus directement associée au matériel mais à l'abonné. Toutes les informations relatives à l'abonné sont contenues dans un module spécifique détenu par l'abonné. Dans le cadre de la norme GSM, les informations relatives à l'abonné sont contenues dans un module d'identité d'abonné SIM (Subscriber Identity Module) sous la forme d'une carte à puce que l'abonné insère dans un radiotéléphone mobile. Ce module, indispensable pour pouvoir utiliser un radiotéléphone, est fourni à l'abonné lors de sa prise d'abonnement sur un réseau de téléphonie mobile GSM.

Les informations contenues dans le module SIM incluent des répertoires de numéros, des messages, un code d'identification personnel PIN que l'abonné doit introduire lorsqu'il initie l'utilisation d'un téléphone mobile, et une information d'identification de l'abonné vis à vis du réseau. Il faut noter que cette information d'identification n'a aucun rapport avec le numéro de téléphone de l'abonné. L'opérateur, qui administre un réseau de téléphonie fixe ou mobile, est capable de faire le lien entre le numéro de téléphone et le numéro d'identification de l'abonné grâce à des informations contenues dans des bases de données de son réseau qui sont inaccessibles à l'utilisateur. Il n'existe donc actuellement aucun moyen d'identifier et de fournir au niveau d'un radiotéléphone le numéro de téléphone de l'utilisateur.

Le but de la présente invention est de remédier à cet inconvénient en proposant un procédé pour délivrer un numéro de téléphone associé à un abonnement téléphonique à l'utilisateur d'un matériel téléphonique dans le cadre dudit abonnement, l'utilisation dudit poste étant conditionnée à la fourniture par l'utilisateur audit poste d'un ensemble de données d'identification d'abonnement stockées dans un support d'informations détenu par le titulaire dudit abonnement et coopérant avec ledit poste téléphonique.

Suivant l'invention, le procédé est caractérisé en ce que le numéro de téléphone est préalablement stocké dans le support d'informations et est transféré dans le poste téléphonique sur demande de l'utilisateur, pour être délivré à l'utilisateur dudit poste.

Ainsi, l'utilisateur d'un poste téléphonique peut connaître le numéro de téléphone de l'abonnement associé à cet poste, sans qu'il soit nécessaire pour cela de prévoir un étiquetage du numéro de téléphone sur cet poste qui peut alors être totalement banalisé et non dépendant d'un abonnement particulier, comme c'est le cas d'un téléphone mobile au sein d'un réseau GSM.

Suivant un autre aspect de l'invention, il est proposé un poste téléphonique comprenant des moyens de contrôle et de traitement, des moyens d'affichage, et des moyens d'interface pour coopérer avec un support d'informations indépendant dudit poste et comprenant des données d'identification d'abonnement, mettant en oeuvre le procédé selon l'invention, est caractérisé en ce qu'un emplacement mémoire est prévu au sein dudit support d'informations pour recevoir le numéro de téléphone correspondant à l'abonnement, et en ce que les moyens de contrôle et de traitement sont agencés pour commander le transfert dudit numéro de téléphone depuis le support d'informations dans le poste téléphonique et son affichage par lesdits moyens d'affichage.

D'autres particularités et avantages de l'invention apparaîtront encore dans la description ci-après. Aux dessins annexés donnés à titre d'exemples non limitatifs:
- la figure 1 représente de façon simplifiée un téléphone mobile doté d'un lecteur de carte à mémoire mettant en oeuvre le procédé selon l'invention ; et
- la figure 2 est un schéma synoptique illustrant les éléments essentiels du téléphone mobile et de la carte intervenant dans l'exécution du procédé selon l'invention.

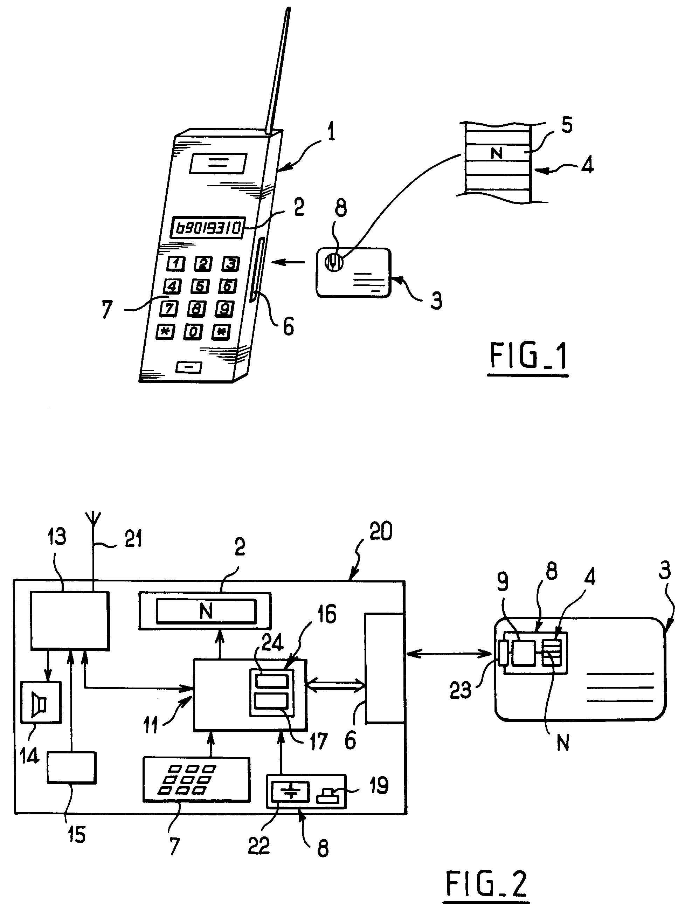

On va maintenant décrire un exemple particulier de mise en oeuvre du procédé selon l'invention, en référence aux figures 1 et 2.

On considère, à titre d'exemple non limitatif en référence à la figure 1, un téléphone mobile 1 généralement doté d'un clavier, d'un dispositif d'affichage 2 et d'un lecteur 6 prévu pour recevoir une carte à mémoire 3 ou à microcontrôleur ou encore, à puce, cette carte comprenant un circuit intégré 8 incluant notamment une zone mémoire 4. Dans le cas de la norme GSM, cette carte à puce 3 est intitulée "Module D'Identité d'Abonné" (SIM) et inclut dans sa zone mémoire 4 des informations relatives à l'abonné, notamment des répertoires de numéros. C'est par exemple au niveau de ces répertoires que peut être placé le numéro de téléphone N de l'abonné, de préférence dans une zone d'écriture dite irréversible.

Dans le contexte de la norme GSM, une carte SIM, ou plus généralement un module SIM a pour fonctions fondamentales de stocker des données et d'exécuter des algorithmes dans des conditions sures, et en particulier un algorithme d'authentification de l'identité de l'abonné. La mémoire d'une carte SIM comprend des champs de données, parmi lesquels on peut citer un champ de donnée administrative, et un champ de donnée d'identification de carte.

Il faut noter que les mécanismes d'échanges de données entre la carte SIM 3 et le téléphone mobile 1 font déjà l'objet d'une normalisation et sont implantées au sein des systèmes de contrôle et de traitement équipant les téléphones mobiles. Il est donc possible d'écrire et de lire des informations dans l'espace mémoire de la carte SIM 3.

L'écriture du numéro de téléphone N de l'abonné dans la carte SIM 3 peut être effectuée par l'opérateur, en l'occurrence l'entreprise ou l'organisme administrant un réseau de téléphonie fixe ou mobile, lors de la prise d'abonnement, dans un emplacement mémoire prédéterminé.

En référence à la figure 2, le téléphone mobile comprend une architecture matérielle 20 incluant autour d'une unité de contrôle et de traitement 11, par exemple un microcontrôleur ou tout autre dispositif équivalent, un dispositif 10 de lecture de carte à puce, un clavier 7, un écran 2, un module d'alimentation 18 comprenant généralement une batterie 22 et des moyens de mise sous tension, par exemple un interrupteur marche/arrêt, et une unité d'émission/réception 13 dotée d'une antenne 21 associée à un haut-parleur 14 et à un micro 15. La carte à puce 3, dans le cas présent la carte SIM, comprend au sein d'un circuit intégré 8 au moins un espace mémoire 4, une unité de contrôle et de traitement 11 chargée de l'exécution d'algorithmes et du contrôle des échanges de données, et un dispositif d'interface 23 avec le lecteur de carte 6 qui est commandé par l'unité de contrôle et de traitement 11. Une telle structure de carte est bien connue de l'homme de métier et est notamment décrite dans le brevet français FR 2 266 222.

Par ailleurs, il est nécessaire d'implanter au sein du programme de gestion 16 du téléphone mobile, généralement implanté dans une mémoire morte, une fonction supplémentaire 17 de lecture du numéro dans le logiciel de contrôle du téléphone mobile 1, afin de commander la lecture du numéro à l'adresse spécifiée dans la mémoire de la carte SIM 3 et de le faire afficher sur le dispositif de visualisation 2.

Dans un exemple pratique de mise en oeuvre du procédé selon l'invention, à la mise sous tension par action sur le bouton marche/arrêt 19 du téléphone mobile 1, 20, l'utilisateur doit dans un premier temps introduire sa carte SIM 3 dans le lecteur 6 prévu à cet effet et s'identifier en frappant sur la clavier 7 son numéro personnel d'identité PIN, comme dans le cas des terminaux bancaires.

La fonction "lecture du numéro" 17 peut en outre être appelée à tout moment grâce à un menu 24 implanté au sein du programme de gestion 16 et permettant d'accéder à différentes fonctionnalités associées à la carte SIM. Il est alors demandé à l'utilisateur de sélectionner une fonctionnalité, notamment celle de vérification de son numéro de téléphone. Lorsque ce choix est effectué, le numéro de téléphone est affiché à l'écran 2.

Une fois l'identification effectuée, la fonction "lecture du numéro" 17 peut être appelée et le numéro de téléphone N est transféré de la puce 8 de la carte 3 dans l'unité de contrôle et de traitement 11 du téléphone 1 et affiché sur le dispositif de visualisation 2, par exemple un écran à cristaux liquides.

Bien sûr, l'invention n'est pas limitée aux exemples qui viennent d'être décrits et de nombreux aménagements peuvent être apportés à ces exemples sans sortir du cadre de l'invention. Ainsi, on peut envisager de multiples modes de stockage du numéro de téléphone au sein du support d'informations. En outre, le support d'informations peut revêtir de nombreuses formes et de technologie quelconque, par exemple magnétique, ou optique. De plus, le procédé selon l'invention peut être mis en oeuvre pour tout type de poste téléphonique, fixe ou mobile, s'il peut recevoir un support d'informations pouvant contenir un numéro de téléphone

## Revendications

1. Procédé pour délivrer un numéro de téléphone (N) associé à un abonnement téléphonique à l'utilisateur d'un poste téléphonique (1) dans le cadre dudit abonnement, l'utilisation dudit poste (1) étant conditionnée à la fourniture par l'utilisateur (1) d'un ensemble de données d'identification d'abonnement stockées dans un support d'informations (3) détenu par le titulaire dudit abonnement et coopérant avec ledit poste téléphonique (1), caractérisé en ce que ce numéro de téléphone (1) est préalablement stocké dans le support d'informations (3) et est transféré dans le poste téléphonique (1) à la demande de l'utilisateur, pour être délivré à l'utilisateur dudit poste (1).

2. Procédé selon la revendication 1, caractérisé en ce que le stockage préalable du numéro de téléphone (N) dans le support d'informations (3) est réalisé par l'opérateur du réseau dont dépend le poste téléphonique (1) au cours d'une séquence de personnalisation dudit support (3).

3. Procédé selon l'une des revendications 1 ou 2, l'utilisation du poste étant subordonnée à l'entrée par l'utilisateur d'un numéro d'identification personnel (PIN), caractérisé en ce que le transfert du numéro de téléphone (N) dans le poste téléphonique (1) est commandé par ledit poste (1) à la suite de l'identification de l'utilisateur et à la demande dudit utilisateur.

4. Procédé selon la revendication 3, caractérisé en ce qu'à l'issue de son transfert dans le poste téléphonique (1), le numéro de téléphone (N) est affiché sur des moyens de visualisation (2) prévus dans ledit poste téléphonique (1).

5. Procédé selon la revendication 4, caractérisé en ce que l'utilisateur du poste téléphonique (1) peut, à tout moment au cours de l'utilisation dudit poste (1), commander la visualisation du numéro de téléphone transféré (N).

6. Application du procédé selon l'une quelconque des revendications précédentes à un réseau de téléphonie mobile, conforme notamment à la norme GSM.

7. Poste téléphonique (1, 20) comprenant des moyens de contrôle et de traitement (11), des moyens d'affichage (2), et des moyens d'interface (6) pour coopérer avec un support d'informations (3) indépendant dudit poste (1) et comprenant des données d'identification d'abonnement, mettant en oeuvre le procédé selon l'une quelconque des revendications précédentes, caractérisé en ce qu'un emplacement mémoire (5) est prévu au sein dudit support d'informations (3) pour recevoir le numéro de téléphone (N) correspondant à l'abonnement, et en ce que les moyens de contrôle et de traitement (11) sont agencés pour commander le transfert dudit numéro de téléphone (N) depuis le support d'informations (3) dans le poste téléphonique (1, 20) et son affichage par lesdits moyens d'affichage (2).

8. Poste (1, 20) selon la revendication 7, caractérisé en ce que les moyens de contrôle et de traitement (11) sont en outre agencés pour commander, à tout moment au cours d'une session d'utilisation du poste téléphonique (1), l'affichage du numéro de téléphone (N) en réponse à une demande exprimée par l'utilisateur dudit poste (1).

9. Téléphone mobile (1) selon l'une des revendications 7 ou 8, mis en oeuvre dans un réseau de communication mobile, notamment selon la norme GSM, le support d'informations (3) étant réalisé sous la forme d'une carte à microcontrôleur (8).
